# EUROPÄISCHE PATENTANMELDUNG

(11) **EP 1 432 255 A1**
(43) Veröffentlichungstag der Anmeldung: **23.06.2004**
(21) Anmeldenummer: 02406129.3
(22) Anmeldetag: 20.12.2002
(51) Int. Cl.: H04Q 7/22

(54) **Verfahren, System und Vorrichtungen zur Wegleitung von Kurzmeldungen in einem Mobilfunknetz**

(71) Anmelder: Swisscom Mobile AG, 3050 Bern (CH)
(72) Erfinder: Sennhauser, René, 8400 Winterthur (CH); Kienle, Thomas, 3006 Bern (CH); Granath, Nils, 3014 Bern (CH)
(74) Vertreter: BOVARD AG - Patentanwälte

(57) **Zusammenfassung**

Es werden ein Verfahren und ein System zur Wegleitung von Kurzmeldungen (SMS) in einem Mobilfunknetz (1) vorgeschlagen. Eine Kurzmeldung (SMS) und ihre Destinationsadresse (MSISDN) werden durch eine mit dem Mobilfunknetz (1) verbundene Übergangsvermittlungsstelle (GMSC) entgegengenommen. Die Destinationsadresse (MSISDN) wird von der Übergangsvermittlungsstelle (GMSC) an ein durch die Destinationsadresse (MSISDN) bestimmtes Teilnehmerregister (HLR) übermittelt. Im Teilnehmerregister (HLR) wird überprüft, ob der Destinationsadresse (MSISDN) eine Dienstkennung (F) zugeordnet ist. Gegebenenfalls wird die Netzwerkadresse (NNN) einer dienstkennungsspezifischen Zusatzdienstzentrale (iSMSC) vom Teilnehmerregister (HLR) an die Übergangsvermittlungsstelle (GMSC) übermittelt. Die Kurzmeldung (SMS) wird von der Übergangsvermittlungsstelle (GMSC) an die durch die Netzwerkadresse (NNN) bestimmte Zusatzdienstzentrale (iSMSC) weitergeleitet, wo die Kurzmeldung gemäss teilnehmerspezifischen Regeln weiterbehandelt wird, wobei die Kurzmeldung (SMS) beispielsweise automatisch umgeleitet, beantwortet oder terminiert wird.

## Beschreibung

### Technisches Gebiet

Die vorliegende Erfindung betrifft ein Verfahren, ein System und Vorrichtungen zur Wegleitung von Kurzmeldungen in einem Mobilfunknetz. Die Erfindung betrifft insbesondere ein Verfahren und ein System zur Wegleitung von Kurzmeldungen in einem Mobilfunknetz, in welchen in einem computer-basierten Teilnehmerregister Destinationsadressen von einer mit dem Mobilfunknetz verbundenen Übergangsvermittlungsstelle entgegengenommen werden, sowie dafür geeignete Vorrichtungen.

### Stand der Technik

Die grosse Beliebtheit und Verbreitung der mobilen Kommunikation über Mobilfunknetze mittels mobiler Kommunikationsendgeräte (Mobilendgerät), wie Mobilfunketelefone oder kommunikationsfähige Laptop- oder Palmtop-Computers, ist nicht nur durch die Möglichkeit der mobilen Sprachkommunikation begründet, sondern auch durch die Möglichkeit der mobilen Datenkommunikation, insbesondere der Möglichkeit, Kurzmeldungen auszutauschen. Als bekannte und sich grosser Beliebtheit erfreuende Kurzmeldungen sollen hier vor allem die so genannten SMS-Kurzmeldungen (Short Message Service) angeführt werden, die in den Normen für GSM- (Global System for Mobile Communication) und UMTS-Mobilfunknetze (Universal Mobile Telecommunications System) definiert werden. Als Kurzmeldungen können aber auch entsprechende Weiterentwicklungen, wie die EMS-Meldungen (Extended Message Services) und MMS-Meldungen (Multimedia Messaging Services), oder andere Datenmeldungen, wie USSD-Meldungen (Unstructured Supplementary Services Data) betrachtet werden.

Standardgemäss wird eine von einem Mobilendgerät abgeschickte Kurzmeldung, insbesondere eine SMS-Kurzmeldung, durch Netzwerkeinheiten des Mobilfunknetzes an eine zuständige Übergangsvermittlungsstelle, ein so genanntes Gateway Mobile Switching Center (GMSC) geleitet. In neueren Ausführungen befindet sich die Übergangsvermittlungsstelle in einer Kurzmeldungsdienstzentrale, einem so genannten Short Message Service Center (SMSC). Auf Grund der Destinationsadresse der Kurzmeldung bestimmt die Übergangsvermittlungsstelle das Teilnehmerregister, ein so genanntes Home Location Register (HLR), welches Aufenthaltsinformationen betreffend den durch die Destinationsadresse bestimmten Teilnehmer führt. Die Übergangsvermittlungsstelle sendet eine Wegleitungsinformationsanfrage, insbesondere eine MAP_SEND_ROUTING_INFO_FOR_SM-Anfrage, welche die Destinationsadresse der Kurzmeldung umfasst, an das bestimmte Teilnehmerregister. Im Teilnehmerregister wird die Netzwerkadresse, eine so genannte Network Node Number (NNN), der Mobilvermittlungsstelle, ein so genanntes Mobile Switching Center (MSC), bestimmt, wo sich der durch die Destinationsadresse bestimmte Teilnehmer aufhält. Die bestimmte Netzwerkadresse wird vom Teilnehmerregister in einer Wegleitungsinformationsantwort, insbesondere in einer MAP_SEND_ROUTING_INFO_FOR_SM-Antwort, an die anfragende Übergangsvermittlungsstelle übermittelt. Schlussendlich leitet die Übergangsvermittlungsstelle die Kurzmeldung an die durch die erhaltene Netzwerkadresse bestimmte Mobilvermittlungsstelle, welche die Kurzmeldung an das durch die Destinationsadresse bestimmte Mobilendgerät übermittelt.

Die bekannten Mechanismen für die Wegleitung von Kurzmeldungen in Mobilfunknetzen ermöglichen mobilen Teilnehmern, Kurzmeldungen über Mobilfunknetze von verschiedenen Netzbetreibern über nationale Grenzen hinweg auszutauschen. Die bekannten Mechanismen für die Wegleitung von Kurzmeldungen ermöglichen jedoch keine teilnehmerspezifische Behandlung und Verarbeitung von Kurzmeldungen.

In der Patentanmeldung WO 00/47004 wird ein Wegleitungsverfahren für Kurzmeldungen in Mobilfunknetzen beschrieben, welches ermöglicht, Kurzmeldungen an ein externes Datennetz zu leiten. Gemäss WO 00/47004 werden Kurzmeldungen von einer Kurzmeldungsdienstzentrale auf Grund einer vordefinierten speziellen Destinationsadresse an eine Konvertierungseinheit geleitet, welche für die Weiterleitung von Kurzmeldungen an das externe Datennetz eingerichtet ist. Das Verfahren gemäss WO 00/47004 ermöglicht zwar eine individuelle Wegleitung von Kurzmeldungen, die eine vordefinierte Destinationsadresse aufweisen, es ermöglicht jedoch keine teilnehmerspezifische Behandlung von Kurzmeldungen.

In der Patentanmeldung WO 02/065795 wird ein Wegleitungsverfahren für Kurzmeldungen in Mobilfunknetzen beschrieben, welches ermöglicht, Kurzmeldungen an eine Dienstzentrale in einem externen Datennetz zu leiten. Gemäss WO 02/065795 wird die Wegleitungsinformationsanfrage von der Übergangsvermittlungsstelle auf Grund der Destinationsadresse der Dienstzentrale an ein virtuelles Teilnehmerregister umgeleitet. Gemäss WO 02/065795 antwortet das virtuelle Teilnehmerregister mit der Netzwerkadresse einer virtuellen Vermittlungsstelle, welche für die Weiterleitung von Kurzmeldungen an die externe Diensteinheit eingerichtet ist. Das Verfahren gemäss WO 02/065795 ermöglicht zwar eine individuelle Wegleitung von Kurzmeldungen, jedoch nur für Kurzmeldungen mit einer definierten speziellen Destinationsadresse, was keine teilnehmerspezifische Behandlung von Kurzmeldungen ermöglicht.

In der Patentanmeldung WO 99/27726 wird ein Verfahren zum automatisierten Sperren von SMS-Kurzmeldungen beschrieben, in welchem im Teilnehmerregister teilnehmerspezifische Sperrlisten geführt werden, in welchen Teilnehmer Teilnehmeradressen von Absendern eintragen, die gesperrt werden sollen. Gemäss WO 99/27726 wird im Teilnehmerregister nach Erhalt einer Wegleitungsinformationsanfrage bestimmt, ob die Absenderadresse der betreffenden Kurzmeldung in einer Sperrliste eingetragen ist, die der Destinationsadresse zugeordnet ist. Gegebenenfalls wird die Wegleitungsinformationsanfrage vom Teilnehmerregister mit einer Zurückweisung beantwortet, die betreffende Kurzmeldung wird in der Übergangsvermittlungsstelle gelöscht und eine Fehlermeldung wird an den Absender übermittelt. Die teilnehmerspezifische Behandlung von Kurzmeldungen gemäss WO 99/27726 ist auf die teilnehmerspezifische Sperrung von Kurzmeldungen beschränkt. Das Verfahren gemäss WO 99/27726 erfordert bedeutende Modifikationen am Teilnehmerregister, die mit Sicherheitsrisiken verbunden sind, da Teilnehmern ein zumindest teilweiser Zugang zum Teilnehmerregister gewährt wird, wo äusserst vertrauliche Teilnehmerdaten gespeichert sind.

### Darstellung der Erfindung

Es ist eine Aufgabe der vorliegenden Erfindung, ein neues Verfahren und ein neues System zur Wegleitung von Kurzmeldungen in einem Mobilfunknetz sowie dafür geeignete Vorrichtungen, nämlich ein computer-basiertes Teilnehmerregister für Mobilfunknetze sowie ein Computerprogrammprodukt mit einem computerlesbaren Medium und darin enthaltenen Computerprogrammcodemitteln zur Steuerung eines oder mehrerer Prozessoren des computer-basierten Teilnehmerregisters, vorzuschlagen, welche nicht die Nachteile des Stands der Technik aufweisen und welche insbesondere eine teilnehmerspezifische Bearbeitung und Behandlung der Kurzmeldungen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Im Verfahren und im System zur Wegleitung von Kurzmeldungen in einem Mobilfunknetz werden eine Kurzmeldung und eine zugeordnete Destinationsadresse durch eine mit dem Mobilfunknetz verbundene Übergangsvermittlungsstelle entgegengenommen. Die Destinationsadresse wird von der Übergangsvermittlungsstelle an ein durch die Destinationsadresse bestimmtes Teilnehmerregister übermittelt.

Die oben genannten Ziele werden durch die vorliegende Erfindung insbesondere dadurch erreicht, dass im Teilnehmerregister ermittelt wird, ob der Destinationsadresse eine Dienstkennung zugeordnet ist, dass vom Teilnehmerregister eine Netzwerkadresse einer dienstkennungsspezifischen Zusatzdienstzentrale an die Übergangsvermittlungsstelle übermittelt wird, wenn der Destinationsadresse eine Dienstkennung zugeordnet ist und dass die Kurzmeldung von der Übergangsvermittlungsstelle an die durch die Netzwerkadresse bestimmte Zusatzdienstzentrale übermittelt wird. Dadurch wird eine dynamische und automatisierte teilnehmerspezifische Wegleitung von Kurzmeldungen an eine oder mehrere speziellen Zusatzdienstzentralen ermöglicht, ohne dass die normierten Abläufe bei der Wegleitung von Kurzmeldungen in der Übergangsvermittlungsstelle modifiziert werden müssen und ohne dass Teilnehmern der Zugang zu Daten des Teilnehmerregisters gewährt werden muss. Vor allem aber wird eine dynamische und automatisierte teilnehmerspezifische Wegleitung von Kurzmeldungen ermöglicht, die nicht nur auf Destinationsadressen beschränkt ist, die einen bestimmten vordefinierten Wert haben. Durch die Zuordnung von Dienstkennungen zu Destinationsadressen im Teilnehmerregister kann die teilnehmerspezifische Behandlung von Kurzmeldungen für beliebige Destinationsadressen wahlweise aktiviert und deaktiviert werden.

Vorzugsweise werden teilnehmerspezifische Regeldaten mit Bearbeitungsinstruktionen in der Zusatzdienstzentrale zugeordnet zu Teilnehmeradressen gespeichert und die Kurzmeldung wird durch die Zusatzdienstzentrale entsprechend den Bearbeitungsinstruktionen, die der Destinationsadresse der Kurzmeldung zugeordnet sind, weiterbehandelt. Durch die Behandlung von Kurzmeldungen gemäss teilnehmerspezifischen Bearbeitungsinstruktionen, die in der Zusatzdienstzentrale gespeichert sind, wird den Teilnehmern ermöglicht, die Behandlung der Kurzmeldungen durch die Wahl und Speicherung gewünschter Regeldaten flexibel und dynamisch zu konfigurieren.

In einer Ausführungsvariante werden teilnehmerspezifische Regeldaten mit Umleitadressen in der Zusatzdienstzentrale zugeordnet zu Teilnehmeradressen gespeichert und die Kurzmeldung wird durch die Zusatzdienstzentrale an die Umleitadresse weitergeleitet, die der Destinationsadresse der Kurzmeldung zugeordnet ist. Dies gibt dem Teilnehmer die Möglichkeit, Kurzmeldungen beispielsweise wegen Abwesenheit, Unerreichbarkeit und/oder Unverfügbarkeit automatisch an eine Umleitadresse übermitteln zu lassen, beispielsweise auf ein E-Mail Konto oder an einen anderen Teilnehmer.

In einer Ausführungsvariante werden teilnehmerspezifische Regeldaten mit Antwortdaten in der Zusatzdienstzentrale zugeordnet zu Teilnehmeradressen gespeichert, durch die Zusatzdienstzentrale wird eine neue Kurzmeldung mit den Antwortdaten generiert, die der Destinationsadresse der entgegengenommenen Kurzmeldung zugeordnet sind, und die neu generierte Kurzmeldung wird durch die Zusatzdienstzentrale an eine in der entgegengenommenen Kurzmeldung enthaltene Absenderadresse übermittelt. Dadurch können Kurzmeldungen automatisch mit Antworten beantwortet werden, die vom Teilnehmer bereitgestellt werden. Durch die Kombination von automatischer Beantwortung und automatischer Umleitung kann der Absender der Kurzmeldung beispielsweise darüber informiert werden, dass seine Kurzmeldung umgeleitet wurde.

In einer Ausführungsvariante werden teilnehmerspezifische Regeldaten mit Spezialteilnehmeradressen in der Zusatzdienstzentrale zugeordnet zu Teilnehmeradressen gespeichert und die Kurzmeldung wird durch die Zusatzdienstzentrale entsprechend den Bearbeitungsinstruktionen weiterbehandelt, die der Spezialteilnehmeradresse zugeordnet sind, die der Destinationsadresse der Kurzmeldung zugeordnet ist. Dadurch können die Teilnehmer flexibel Kurzmeldungen von bestimmten Absendern speziell behandeln lassen, beispielsweise können Kurzmeldungen von bestimmten Absendern gesperrt, automatisch umgeleitet und/oder automatisch beantwortet werden.

In einer Ausführungsvariante werden teilnehmerspezifische Regeldaten mit Passiercodes in der Zusatzdienstzentrale zugeordnet zu Teilnehmeradressen gespeichert und die Kurzmeldung wird durch die Zusatzdienstzentrale terminiert, wenn der Destinationsadresse der Kurzmeldung ein Passiercode zugeordnet ist, der nicht in der Kurzmeldung enthalten ist. So kann der Teilnehmer wählen, nur Kurzmeldungen von Absendern entgegenzunehmen, denen er einen Passiercode mitgeteilt hat, beispielsweise ein Passwort.

In einer Ausführungsvariante werden teilnehmerspezifische Regeldaten mit Zeitangaben in der Zusatzdienstzentrale zugeordnet zu Teilnehmeradressen gespeichert und die Kurzmeldung wird durch die Zusatzdienstzentrale während einer Zeitdauer, die durch die Zeitangaben bestimmt ist, die der Destinationsadresse der Kurzmeldung zugeordnet sind, entsprechend den zugeordneten Bearbeitungsinstruktionen behandelt. Dies hat den Vorteil, dass Regeldaten, respektive Bearbeitungsinstruktionen, die der Teilnehmer dynamisch nur für eine bestimmte Zeitdauer aktiviert haben möchte, automatisch wieder deaktiviert werden können. Zum Beispiel werden so Kurzmeldungen nur für eine beschränkte Zeitdauer umgeleitet und/oder automatisch beantwortet.

Vorzugsweise werden teilnehmerspezifische Aufenthaltsinformationen, die der Destinationsadresse der Kurzmeldung zugeordnet sind, vom Teilnehmerregister an die Zusatzdienstzentrale übermittelt und die Kurzmeldung wird von der Zusatzdienstzentrale unter Verwendung der Aufenthaltsinformationen an das durch die Destinationsadresse bestimmte mobile Kommunikationsendgerät übermittelt. Wenn keine Regeldaten respektive Bearbeitungsinstruktionen mit Umleitungen und Terminierungen (Sperrungen) aktiviert sind, werden die Kurzmeldungen von der Zusatzdienstzentrale auf diese Weise automatisch an den durch die Destinationsadresse bestimmten Empfänger weitergeleitet.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

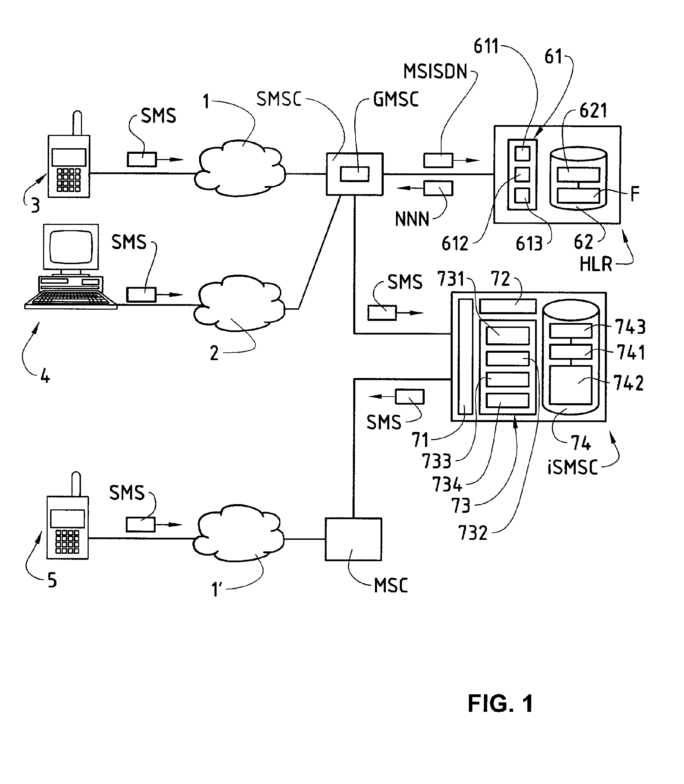

Figur 1 zeigt ein Blockdiagramm, welches schematisch Kommunikationsendgeräte illustriert, die mit Kommunikationsnetzen verbunden sind, welche für den Austausch von Kurzmeldungen über eine Übergangsvermittlungsstelle, die mit einem Teilnehmerregister verbunden ist, und über eine Zusatzdienstzentrale miteinander verbindbar sind.

### Wege zur Ausführung der Erfindung

In der Figur 1 bezeichnen die Bezugszeichen 1, 1' jeweils ein Mobilfunknetz, vorzugsweise ein GSM- oder ein UMTS-Netz. Der Fachmann wird jedoch verstehen, dass die nachfolgenden Ausführungen auch auf andere Mobilfunknetze anwendbar sind. Die Bezugszeichen 3, 5 beziehen sich jeweils auf ein mobiles Kommunikationsendgerät beispielsweise ein Mobilfunktelefon oder ein Laptop- oder PDA-Computer (Personal Digital Assistant) mit einem Kommunikationsmodul für die Kommunikation über das Mobilfunknetz 1, 1'.

In der Figur 1 bezeichnet das Bezugszeichen 2 ein Festnetz, vorzugsweise ein IP-Netz (Internet Protocol). Der Fachmann wird jedoch verstehen, dass die nachfolgenden Ausführungen auch auf andere Festnetze, wie ISDN-Netze (Integrated Services Digital Network) oder LANs (Local Area Network) anwendbar sind. Das Bezugszeichen 4 bezieht sich auf ein Kommunikationsendgerät mit einem Kommunikationsmodul für die Kommunikation über das Festnetz 2, beispielsweise ein PC (Personal Computer).

In der Figur 1 bezeichnet das Bezugszeichen SMS eine Kurzmeldung, deren Übertragungsrichtung schematisch mit einem Pfeil angegeben ist. Die Kurzmeldung ist vorzugsweise eine SMS-Kurzmeldung, der Fachmann wird jedoch verstehen, dass die nachfolgenden Ausführungen auch auf Weiterentwicklungen von SMS-Kurzmeldungen, wie EMS-Meldungen oder MMS-Meldungen, oder auf andere Datenmeldungen, wie beispielsweise USSD-Meldungen, anwendbar sind.

Wie in der Figur 1 schematisch dargestellt ist, sind sowohl das Mobilfunknetz 1 als auch das Festnetz 2 mit einer Übergangsvermittlungsstelle GMSC verbunden, an welche die Kurzmeldungen SMS der Kommunikationsendgeräte 3, 4 sowie die Destinationsadressen der Kurzmeldungen SMS standardgemäss weitergeleitet werden. Die Destinationsadressen sind vorzugsweise MSISDN-Nummern (Mobile Subscriber ISDN-Nummern, ISDN - Integrated Services Digital Network), der Fachmann wird jedoch verstehen, dass die nachfolgenden Ausführungen auch auf andere Adressformate anwendbar sind. Die Weiterleitung der Kurzmeldungen SMS an die Übergangsvermittlungsstelle GMSC ist beispielsweise in den Normen für GSM- und UMTS-Netze definiert. Wie in der Figur 1 dargestellt ist, ist die Übergangsvermittlungsstelle GMSC Teil einer Kurzmeldungsdienstzentrale SMSC. Die Übergangsvermittlungsstelle GMSC kann jedoch auch eine separate Netzwerkeinheit sein, die mit der Kurzmeldungsdienstzentrale SMSC über eine Kommunikationsverbindung verbunden ist. Die Übergangsvermittlungsstelle GMSC, respektive die Kurzmeldungsdienstzentrale SMSC sind computer-basierte Netzwerkeinheiten, deren Funktionen beispielsweise in den Normen der GSMund UMTS-Netze definiert sind.

Gemäss den Normen der GSM- und UMTS-Netze bestimmt die Übergangsvermittlungsstelle GMSC anhand der Destinationsadresse einer empfangenen Kurzmeldung SMS das Teilnehmerregister HLR, welches Aufenthaltsinformationen für den Teilnehmer führt, der durch die Destinationsadresse bestimmt ist. Wie in der Figur 1 schematisch dargestellt ist, übermittelt die Übergangsvermittlungsstelle GMSC eine Wegleitungsinformationsanfrage, insbesondere eine so genannte MAP_SEND_ROUTING_INFO_FOR_SM-Anfrage, welche die Destinationsadresse MSISDN der empfangenen Kurzmeldung SMS umfasst, an das bestimmte Teilnehmerregister HLR.

Das Teilnehmerregister HLR ist eine computer-basierte Netzwerkeinheit, deren Funktionen beispielsweise in den Normen der GSM- und UMTS-Netze definiert sind. Das Teilnehmerregister HLR verfügt insbesondere über das Wegleitungsanfragemodul 61, welches die Wegleitungsinformationsanfrage von der Übergangsvermittlungsstelle GMSC entgegennimmt und die Destinationsadresse MSISDN der entgegengenommenen Wegleitungsinformationsanfrage entnimmt. Zusätzlich umfasst das Teilnehmerregister HLR nicht standardgemässe funktionale Module, nämlich das Filtermodul 611, das Umleitungsinformationsmodul 612 und das Aufenthaltsinformationsmodul 613, welche vorzugsweise als programmierte Softwaremodule auf einem Computerprogrammprodukt ausgeführt sind, welches ein computerlesbares Medium umfasst. Zudem weist das Teilnehmerregister HLR in der Teilnehmerdatenbank 62 ein nicht standardgemässes Datenfeld zum Speichern einer Dienstkennung F auf, das jeweils einer Teilnehmeradresse 621 zugeordnet ist. Die Dienstkennung F umfasst beispielsweise ein einziges Bit, das als so genanntes Flag zum Anzeigen von Zusatzdiensten dient, sie kann aber auch mehrere Bits umfassen, um Zusatzdienste anzuzeigen, die durch verschiedene Zusatzdienstzentralen ausgeführt werden.

Das Filtermodul 611 überprüft zunächst, ob die Wegleitungsinformationsanfrage von einer Zusatzdienstzentrale iSMSC (das Bezugszeichen ist eine Abkürzung für intelligent Short Message Service Center) empfangen wurde. Falls die Wegleitungsinformationsanfrage von einer Zusatzdienstzentrale iSMSC empfangen wurde, wird die Wegleitungsinformationsanfrage vom Teilnehmerregister HLR standardmässig behandelt, das heisst, im Teilnehmerregister HLR wird die Netzwerkadresse der Mobilvermittlungsstelle MSC bestimmt, wo sich der durch die Destinationsadresse bestimmte Teilnehmer aufhält, und in einer Wegleitungsinformationsantwort, insbesondere in einer MAP_SEND_ROUTING_INFO_FOR_SM-Antwort, an die anfragende Zusatzdienstzentrale iSMSC übermittelt. Andernfalls ermittelt das Filtermodul 611, ob der Destinationsadresse MSISDN, die mit der Wegleitungsinformationsanfrage empfangen wurde, in der Teilnehmerdatenbank 62 eine Dienstkennung F zugeordnet ist.

Falls der Destinationsadresse MSISDN eine Dienstkennung F zugeordnet ist, bestimmt das Umleitungsinformationsmodul 612 die Netzwerkadresse NNN einer Zusatzdienstzentrale iSMSC, die der Dienstkennung F zugeordnet ist. Das Umleitungsinformationsmodul 612 übermittelt die bestimmte Netzwerkadresse NNN, wie in der Figur 1 schematisch dargestellt ist, in einer Wegleitungsinformationsantwort, insbesondere in einer MAP_SEND_ROUTING_INFO_FOR_SM-Antwort, an die anfragende Übergangsvermittlungsstelle GMSC. Die Übermittlung der dienstkennungsspezifischen Netzwerkadresse NNN der Zusatzdienstzentrale iSMSC wird durch das Umleitungsinformationsmodul 612 an Stelle der standardgemässen Übermittlung der zuständigen Mobilvermittlungsstelle, wo sich der durch die Destinationsadresse bestimmte Teilnehmer aufhält, durchgeführt. Die Kommunikationsverbindung zwischen der Übergangsvermittlungsstelle GMSC und dem Teilnehmerregister HLR basiert beispielsweise auf dem SS7-Signalisierungssystem (Signaling System Number 7).

Die Wegleitungsinformationsantwort vom Teilnehmerregister HLR wird in der Übergangsvermittlungsstelle GMSC entgegengenommen. Die Kurzmeldung SMS wird von der der Übergangsvermittlungsstelle GMSC standardgemäss an diejenige Netzwerkeinheit weitergeleitet, die durch die Netzwerkadresse bestimmt ist, die in der Wegleitungsinformationsantwort vom Teilnehmerregister HLR empfangenen wurde. Wie in der Figur 1 schematisch dargestellt ist, wird die Kurzmeldung SMS folglich von der Übergangsvermittlungsstelle GMSC an die durch die Netzwerkadresse NNN bestimmte Zusatzdienstzentrale iSMSC weitergeleitet.

Die Zusatzdienstzentrale iSMSC umfasst mindestens einen Computer, eine Regeldatenbank 74 sowie mehrere funktionale Module, nämlich ein Empfangsmodul 71, ein Konfigurationsmodul 72 und ein Verarbeitungsmodul 73, welche vorzugsweise als programmierte Softwaremodule auf einem Computerprogrammprodukt ausgeführt sind, welches ein computerlesbares Medium umfasst.

Das Empfangsmodul 71 ist eingerichtet zum Entgegennehmen von Kurzmeldungen SMS von der Übergangsvermittlungsstelle GMSC. Die Kommunikationsverbindung zwischen der Übergangsvermittlungsstelle GMSC und der Zusatzdienstzentrale iSMSC basiert beispielsweise auf dem SS7-Signalisierungssystem.

Das Konfigurationsmodul 72 dient zum Entgegennehmen und Abspeichern von teilnehmerspezifischen Regeldaten von den Teilnehmern. Die Regeldaten werden vom Konfigurationsmodul 72 beispielsweise mittels einer Web-Schnittstelle über das Internet entgegengenommen, auf welche die Teilnehmer mittels der Kommunikationsendgeräte 3, 4, 5 zugreifen können. In einer alternativen oder zusätzlichen Ausführungsvariante kann das Konfigurationsmodul 72 die Regeldaten von den Kommunikationsendgeräten 3, 4, 5 in Kurzmeldungen entgegennehmen. Das Konfigurationsmodul 72 speichert die entgegengenommenen Regeldaten in der Regeldatenbank 74, wobei die teilnehmerspezifischen Regeldaten 742 jeweils der Teilnehmeradresse 741 des betreffenden Teilnehmers zugeordnet werden. In der Tabelle 1 werden beispielhaft Regeldaten dargestellt, deren Bedeutung und Anwendung in den nachfolgenden Abschnitten beschrieben werden.

Wie in der Tabelle 1 dargestellt wird, entsprechen die Regeldaten Regeln, die durch Bearbeitungsinstruktionen und Bearbeitungsparameter definiert sind und durch Zeitangaben oder ein Aktivierungsflag aktiviert oder deaktiviert werden. Durch die Bearbeitungsinstruktionen werden verschiedene Aktivitäten, wie automatische Umleitung, Beantwortung, oder Terminierung der Kurzmeldung SMS bestimmt. Durch die Aktivierung mehrerer Regeln können mehrere Aktivitäten kombiniert werden. Die Zeitangaben zur Aktivierung/Deaktivierung einer Regel können eines oder mehrere Kalenderdaten umfassen, die eine längere Zeitperiode definieren, während der die betreffende Regel aktiv ist, oder sie können eine Angabe von Stunden und/oder Minuten umfassen, die eine kürzere Zeitdauer definieren, während der die betreffende Regel aktiv ist. Die Regeln in der Regeldatenbank 74 werden auf Grund der Zeitangaben durch das Verarbeitungsmodul 73 automatisch aktiviert respektive deaktiviert. Als Alternative kann eine Regel in der Regeldatenbank 74 durch die Teilnehmer durch Setzen oder Zurücksetzen eines Aktivierungsflags "manuell" aktiviert respektive deaktiviert werden.

**Tabelle 1**

| Bearbeitungsinstruktion | Bearbeitungsparameter | | Zeitangabe (Aktivierungsflag) |
|---|---|---|---|
| Umleiten | Umleitadresse | | |
| Umleiten | Umleitadresse | Spezialteilnehmer | |
| Beantworten | Antwortdaten | | |
| Beantworten | Antwortdaten | Spezialteilnehmer | |
| Terminieren | | Spezialteilnehmer | |
| Terminieren | Passiercode | | |

Das Verarbeitungsmodul 73 bestimmt, wie eine Kurzmeldung SMS, die von der Übergangsvermittlungsstelle GSMC empfangen wurde, weiterzubehandeln ist, indem es die aktivierten Regeln bestimmt, die in der Regeldatenbank 74 der Destinationsadresse der Kurzmeldung SMS zugeordnet sind. Entsprechend den bestimmten Regeln, die für die Weiterbehandlung der Kurzmeldung SMS anzuwenden sind, werden verschiedene funktionale Module des Verarbeitungsmoduls 73 ausgeführt, nämlich das Umleitungsmodul 731, das Beantwortungsmodul 732, das Terminierungsmodul 733 und/oder das Weiterleitungsmodul 734.

Umfassen die aktivierten Regeln eine Bearbeitungsinstruktion zum Umleiten der Kurzmeldung SMS, wird durch das Umleitungsmodul 731 überprüft, ob die entsprechenden Bearbeitungsparameter einen durch eine Teilnehmeradresse bestimmten Spezialteilnehmer umfassen. Gegebenenfalls wird durch das Umleitungsmodul 731 überprüft, ob die Absenderadresse der Kurzmeldung SMS mit der Spezialteilnehmeradresse übereinstimmt. Wenn die Bearbeitungsparameter keinen Spezialteilnehmer bestimmen oder wenn andernfalls die Absenderadresse mit der Spezialteilnehmeradresse übereinstimmt, leitet das Umleitungsmodul 731 die Kurzmeldung SMS an die durch die Bearbeitungsparameter spezifizierte Umleitadresse. Die Umleitadresse ist beispielsweise eine E-Mail-Adresse oder eine Teilnehmeradresse, die einem anderen mobilen oder festen Kommunikationsendgerät zugeteilt ist.

Umfassen die aktivierten Regeln eine Bearbeitungsinstruktion zum Beantworten der Kurzmeldung SMS, wird durch das Beantwortungsmodul 732 überprüft, ob die entsprechenden Bearbeitungsparameter einen durch eine Teilnehmeradresse bestimmten Spezialteilnehmer umfassen. Gegebenenfalls wird durch das Beantwortungsmodul 732 überprüft, ob die Absenderadresse der Kurzmeldung SMS mit der Spezialteilnehmeradresse übereinstimmt. Wenn die Bearbeitungsparameter keinen Spezialteilnehmer bestimmen oder wenn andernfalls die Absenderadresse mit der Spezialteilnehmeradresse übereinstimmt, generiert das Beantwortungsmodul 732 basierend auf den durch die Bearbeitungsparameter spezifizierten Antwortdaten eine neue Kurzmeldung und übermittelt diese neue Kurzmeldung an die Absenderadresse der vorgängig entgegengenommenen Kurzmeldung SMS.

Umfassen die aktivierten Regeln eine Bearbeitungsinstruktion zum Terminieren der Kurzmeldung SMS, wird durch das Terminierungsmodul 733 überprüft, ob die entsprechenden Bearbeitungsparameter einen durch eine Teilnehmeradresse bestimmten Spezialteilnehmer umfassen. Gegebenenfalls wird durch das Terminierungsmodul 733 überprüft, ob die Absenderadresse der Kurzmeldung SMS mit der Spezialteilnehmeradresse übereinstimmt. Wenn die Absenderadresse mit der Spezialteilnehmeradresse übereinstimmt, das heisst, wenn die Absenderadresse als Sperradresse definiert ist, terminiert das Terminierungsmodul 733 die entgegengenommenen Kurzmeldung SMS, das heisst, die Kurzmeldung SMS dieses Absenders wird gelöscht und nicht weitergeleitet. Das Terminierungsmodul 733 überprüft auch, ob die entsprechenden Bearbeitungsparameter einen Passiercode umfassen und ob die Kurzmeldung SMS gegebenenfalls diesen Passiercode umfasst. Wenn der durch die Bearbeitungsparameter bestimmte Passiercode nicht in der Kurzmeldung SMS enthalten ist, terminiert das Terminierungsmodul 733 die entgegengenommene Kurzmeldung SMS.

Umfassen die aktivierten Regeln keine Bearbeitungsinstruktion zum Umleiten der Kurzmeldung SMS und muss die Kurzmeldung SMS nicht terminiert werden, leitet das Weiterleitungsmodul 734 die Kurzmeldung SMS an das durch die Destinationsadresse MSISDN der Kurzmeldung SMS bestimmte mobile Kommunikationsendgerät 5 weiter. Dabei verwendet das Weiterleitungsmodul 734 teilnehmerspezifische Aufenthaltsinformationen, welche im Teilnehmerregister HLR gespeichert sind. Die teilnehmerspezifischen Aufenthaltsinformationen werden vorzugsweise, wie vorgängig beschrieben, durch die Zusatzdienstzentrale iSMSC mittels einer Wegleitungsinformationsanfrage, insbesondere mittels einer MAP_SEND_ROUTING_INFO_FOR_SM-Anfrage, vom Teilnehmerregister HLR angefragt. Im Teilnehmerregister HLR wird die empfangene Wegleitungsinformationsanfrage durch das Aufenthaltsinformationsmodul 613 mit einer Wegleitungsinformationsantwort, insbesondere mit einer MAP_SEND_ROUTING_INFO_FOR_SM-Antwort beantwortet. Die empfangenen Aufenthaltsinformationen werden in der Zusatzdienstzentrale iSMSC im Aufenthaltsinformationsspeichermodful 743 gespeichert. Die Kurzmeldung SMS wird darauf, wie in der Figur 1 schematisch dargestellt, durch das Weiterleitungsmodul 734 von der Zusatzdienstzentrale iSMSC an die durch die Aufenthaltsinformationen bestimmte Mobilvermittlungsstelle MSC weitergeleitet, wo sich der durch die Destinationsadresse der Kurzmeldung SMS bestimmte Teilnehmer aufhält, und von dort über das Mobilfunknetz 1' an das mobile Kommunikationsendgerät 5 dieses Teilnehmers übermittelt. Die Kommunikationsverbindung zwischen der Zusatzdienstzentrale iSMSC und der Mobilvermittlungsstelle MSC basiert beispielsweise auf dem SS7-Signalisierungssystem oder auf einem entsprechenden Protokoll, das beispielsweise über IP (Internet Protocol) transportiert wird.

## Patentansprüche

1. Verfahren zur Wegleitung von Kurzmeldungen (SMS) in einem Mobilfunknetz (1), umfassend:
- Entgegennehmen einer Kurzmeldung (SMS) und einer zugeordneten Destinationsadresse (MSISDN) durch eine mit dem Mobilfunknetz (1) verbundene Übergangsvermittlungsstelle (GMSC),
- Übermitteln der Destinationsadresse (MSISDN) von der Übergangsvermittlungsstelle (GMSC) an ein durch die Destinationsadresse (MSISDN) bestimmtes Teilnehmerregister (HLR),
**gekennzeichnet durch**:
- Ermitteln im Teilnehmerregister (HLR), ob der Destinationsadresse (MSISDN) eine Dienstkennung (F) zugeordnet ist,
- Übermitteln einer Netzwerkadresse (NNN) einer dienstkennungsspezifischen Zusatzdienstzentrale (iSMSC) vom Teilnehmerregister (HLR) an die Übergangsvermittlungsstelle (GMSC), wenn der Destinationsadresse (MSISDN) eine Dienstkennung (F) zugeordnet ist, und
- Übermitteln der Kurzmeldung (SMS) von der Übergangsvermittlungsstelle (GMSC) an die **durch** die Netzwerkadresse (NNN) bestimmte Zusatzdienstzentrale (iSMSC).

2. Verfahren nach Anspruch 1, **gekennzeichnet durch**: Speichern von teilnehmerspezifischen Regeldaten (742) mit Bearbeitungsinstruktionen, zugeordnet zu Teilnehmeradressen (741) in der Zusatzdienstzentrale (iSMSC), Weiterbehandlung der Kurzmeldung (SMS) **durch** die Zusatzdienstzentrale (iSMSC) entsprechend den Bearbeitungsinstruktionen, die der Destinationsadresse (MSISDN) der Kurzmeldung (SMS) zugeordnet sind.

3. Verfahren nach Anspruch 2, **gekennzeichnet durch**: Speichern von teilnehmerspezifischen Regeldaten (742) mit Umleitadressen, zugeordnet zu Teilnehmeradressen (741) in der Zusatzdienstzentrale (iSMSC), Weiterleiten der Kurzmeldung (SMS) **durch** die Zusatzdienstzentrale (iSMSC) an die Umleitadresse, die der Destinationsadresse (MSISDN) der Kurzmeldung (SMS) zugeordnet ist.

4. Verfahren nach einem der Ansprüche 2 oder 3, **gekennzeichnet durch**: Speichern von teilnehmerspezifischen Regeldaten (742) mit Antwortdaten, zugeordnet zu Teilnehmeradressen (741) in der Zusatzdienstzentrale (iSMSC), Generieren einer neuen Kurzmeldung **durch** die Zusatzdienstzentrale (iSMSC) mit den Antwortdaten, die der Destinationsadresse (MSISDN) der entgegengenommenen Kurzmeldung (SMS) zugeordnet sind, und Übermitteln der neu generierten Kurzmeldung **durch** die Zusatzdienstzentrale (iSMSC) an eine in der entgegengenommenen Kurzmeldung (SMS) enthaltene Absenderadresse.

5. Verfahren nach einem der Ansprüche 2 bis 4, **gekennzeichnet durch**: Speichern von teilnehmerspezifischen Regeldaten (742) mit Spezialteilnehmeradressen, zugeordnet zu Teilnehmeradressen (741) in der Zusatzdienstzentrale (iSMSC), Weiterbehandlung der Kurzmeldung (SMS) **durch** die Zusatzdienstzentrale (iSMSC) entsprechend den Bearbeitungsinstruktionen, die der Spezialteilnehmeradresse zugeordnet sind, die der Destinationsadresse (MSISDN) der Kurzmeldung (SMS) zugeordnet ist.

6. Verfahren nach einem der Ansprüche 2 bis 5, **gekennzeichnet durch**: Speichern von teilnehmerspezifischen Regeldaten (742) mit Passiercodes, zugeordnet zu Teilnehmeradressen (741) in der Zusatzdienstzentrale (iSMSC), Terminieren der Kurzmeldung (SMS) **durch** die Zusatzdienstzentrale (iSMSC), wenn der Destinationsadresse (MSISDN) der Kurzmeldung (SMS) ein Passiercode zugeordnet ist, der nicht in der Kurzmeldung (SMS) enthalten ist.

7. Verfahren nach einem der Ansprüche 2 bis 6, **gekennzeichnet durch**: Speichern von teilnehmerspezifischen Regeldaten (742) mit Zeitangaben, zugeordnet zu Teilnehmeradressen (741) in der Zusatzdienstzentrale (iSMSC), Weiterbehandlung der Kurzmeldung (SMS) **durch** die Zusatzdienstzentrale (iSMSC) entsprechend den zugeordneten Bearbeitungsinstruktionen, während einer Zeitdauer, die **durch** die Zeitangaben bestimmt ist, die der Destinationsadresse (MSISDN) der Kurzmeldung (SMS) zugeordnet sind.

8. Verfahren nach einem der Ansprüche 1 bis 7, **gekennzeichnet durch**: Übermitteln von teilnehmerspezifischen Aufenthaltsinformationen, die der Destinationsadresse (MSISDN) der Kurzmeldung (SMS) zugeordnet sind, vom Teilnehmerregister (HLR) an die Zusatzdienstzentrale (iSMSC), und Weiterleiten der Kurzmeldung (SMS) von der Zusatzdienstzentrale (iSMSC) an das **durch** die Destinationsadresse (MSISDN) bestimmte mobile Kommunikationsendgerät (5) unter Verwendung der Aufenthaltsinformationen.

9. Computer-basiertes Teilnehmerregister (HLR) für Mobilfunknetze (1), umfassend:
- ein Wegleitungsanfragemodul zum Entgegennehmen von Wegleitungsinformationsanfragen von einer mit dem Mobilfunknetz verbundenen Übergangsvermittlungsstelle (GMSC) und zum Entnehmen einer Destinationsadresse (MSISDN) aus entgegengenommenen Wegleitungsinformationsanfragen,
**gekennzeichnet durch**:
- ein Filtermodul zum Ermitteln, ob der Destinationsadresse (MSISDN) im Teilnehmerregister (HLR) eine Dienstkennung (F) zugeordnet ist, und
- Umleitungsinformationsmodul zum Übermitteln einer Netzwerkadresse (NNN) einer dienstkennungsspezifischen Zusatzdienstzentrale (iSMSC) an die Übergangsvermittlungsstelle (GMSC), wenn der Destinationsadresse (MSISDN) eine Dienstkennung (F) zugeordnet ist.

10. Computerprogrammprodukt umfassend: ein computerlesbares Medium mit darin enthaltenen Computerprogrammcodemitteln zur Steuerung eines oder mehrerer Prozessoren eines computer-basierten Teilnehmerregisters (HLR) für Mobilfunknetze (1), derart,
dass im Teilnehmerregister (HLR) Wegleitungsinformationsanfragen von einer mit dem Mobilfunknetz verbundenen Übergangsvermittlungsstelle (GMSC) entgegengenommen werden, und
dass im Teilnehmerregister (HLR) aus den entgegengenommenen Wegleitungsinformationsanfragen jeweils eine Destinationsadresse (MSISDN) entnommen wird,
**gekennzeichnet durch** weitere Computerprogrammcodemittel, die die Prozessoren des Teilnehmerregisters (HLR) derart steuern,
dass im Teilnehmerregister (HLR) ermittelt wird, ob der Destinationsadresse (MSISDN) eine Dienstkennung (F) zugeordnet ist, und
dass vom Teilnehmerregister (HLR) eine Netzwerkadresse (NNN) einer dienstkennungsspezifischen Zusatzdienstzentrale (iSMSC) an die Übergangsvermittlungsstelle (GMSC) übermittelt wird, wenn der Destinationsadresse (MSISDN) eine Dienstkennung (F) zugeordnet ist.

11. System zur Wegleitung von Kurzmeldungen (SMS) in einem Mobilfunknetz (1), umfassend:
- ein computer-basiertes Teilnehmerregister (HLR) für Mobilfunknetze (1), mit einem Wegleitungsanfragemodule (62) zum Entgegennehmen von Wegleitungsinformationsanfragen von einer mit dem Mobilfunknetz verbundenen Übergangsvermittlungsstelle (GMSC) und zum Entnehmen einer Destinationsadresse (MSISDN) aus entgegengenommenen Wegleitungsinformationsanfragen,
**gekennzeichnet durch**:
- ein Filtermodul (611) im Teilnehmerregister (HLR) zum Ermitteln, ob der Destinationsadresse (MSISDN) im Teilnehmerregister (HLR) eine Dienstkennung (F) zugeordnet ist, und
- ein Umleitungsinformationsmodul (612) im Teilnehmerregister (HLR) zum Übermitteln einer Netzwerkadresse (NNN) einer dienstkennungsspezifischen Zusatzdienstzentrale (iSMSC) an die Übergangsvermittlungsstelle (GMSC), wenn der Destinationsadresse (MSISDN) eine Dienstkennung (F) zugeordnet ist, und
- eine mit dem Mobilfunknetz (1) verbindbare computer-basierte Zusatzdienstzentrale (iSMSC) mit einem Empfangsmodul (71) zum Entgegennehmen von Kurzmeldungen (SMS) von der Übergangsvermittlungsstelle (GMSC).

12. System nach Anspruch 11, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Bearbeitungsinstruktionen und zum Speichern der entgegengenommenen Regeldaten (742), zugeordnet zu Teilnehmeradressen (741), und ein Verarbeitungsmodul (73) in der Zusatzdienstzentrale (iSMSC), eingerichtet zur Weiterbehandlung der entgegengenommenen Kurzmeldungen (SMS) jeweils entsprechend den Bearbeitungsinstruktionen, die der Destinationsadresse (MSISDN) der betreffenden Kurzmeldung (SMS) zugeordnet sind.

13. System nach Anspruch 12, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Umleitadressen und zum Speichern der entgegengenommenen Regeldaten (742) mit Umleitadressen, zugeordnet zu Teilnehmeradressen (741), und ein Umleitungsmodul (731) in der Zusatzdienstzentrale (iSMSC) zum Weiterleiten einer der entgegengenommenen Kurzmeldungen (SMS) an die Umleitadresse, die der Destinationsadresse (MSISDN) dieser Kurzmeldung (SMS) zugeordnet ist.

14. System nach einem der Ansprüche 12 oder 13, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Antwortdaten und zum Speichern der entgegengenommenen Regeldaten (742) mit Antwortdaten, zugeordnet zu Teilnehmeradressen (741), und ein Beantwortungsmodul (732) in der Zusatzdienstzentrale (iSMSC) zum Generieren einer neuen Kurzmeldung mit den Antwortdaten, die der Destinationsadresse (MSISDN) von einer betreffenden der entgegengenommenen Kurzmeldungen (SMS) zugeordnet sind, und zum Übermitteln der neu generierten Kurzmeldung (SMS), an eine in der betreffenden entgegengenommenen Kurzmeldung (SMS) enthaltene Absenderadresse.

15. System nach einem der Ansprüche 12 bis 14, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Spezialteilnehmeradressen und zum Speichern der entgegengenommenen Regeldaten (742) mit Spezialteilnehmeradressen, zugeordnet zu Teilnehmeradressen (741), und ein Verarbeitungsmodul (73) in der Zusatzdienstzentrale (iSMSC), eingerichtet zur Weiterbehandlung der entgegengenommenen Kurzmeldungen (SMS) jeweils entsprechend den Bearbeitungsinstruktionen, die der Spezialteilnehmeradresse zugeordnet sind, die der Destinationsadresse (MSISDN) der betreffenden Kurzmeldung (SMS) zugeordnet ist.

16. System nach einem der Ansprüche 12 bis 15, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Passiercodes und zum Speichern der entgegengenommenen Regeldaten (742) mit Passiercodes, zugeordnet zu Teilnehmeradressen (741), und ein Terminierungsmodul (733) in der Zusatzdienstzentrale (iSMSC) zum Terminieren einer der entgegengenommenen Kurzmeldungen (SMS), wenn der Destinationsadresse (MSISDN) dieser Kurzmeldung (SMS) ein Passiercode zugeordnet ist, der nicht in dieser Kurzmeldung (SMS) enthalten ist.

17. System nach einem der Ansprüche 12 bis 16, **gekennzeichnet durch**: ein Konfigurationsmodul (72) in der Zusatzdienstzentrale (iSMSC), eingerichtet zum Entgegennehmen von teilnehmerspezifischen Regeldaten (742) mit Zeitangaben und zum Speichern der entgegengenommenen Regeldaten (742) mit Zeitangaben, zugeordnet zu Teilnehmeradressen (741), und ein Verarbeitungsmodul (73) in der Zusatzdienstzentrale (iSMSC), eingerichtet zur Weiterbehandlung der entgegengenommenen Kurzmeldungen (SMS), jeweils entsprechend den zugeordneten Bearbeitungsinstruktionen, während einer Zeitdauer, die **durch** die Zeitangaben bestimmt ist, die der Destinationsadresse (MSISDN) der betreffenden Kurzmeldung (SMS) zugeordnet sind.

18. System nach einem der Ansprüche 11 bis 17, **gekennzeichnet durch**: ein Aufenthaltsinformationsmodul (613) im Teilnehmerregister (HLR) zum Übermitteln von teilnehmerspezifischen Aufenthaltsinformationen, die im Teilnehmerregister (HLR) jeweils Teilnehmeradressen (741) zugeordnet gespeichert sind, an die Zusatzdienstzentrale (iSMSC), ein Aufenthaltsinformationsspeichermodul (743) in der Zusatzdienstzentrale (iSMSC) zum Entgegennehmen und Speichern der teilnehmerspezifischen Aufenthaltsinformationen, und ein Weiterleitungsmodul (734) in der Zusatzdienstzentrale (iSMSC) zum Weiterleiten der entgegengenommenen Kurzmeldungen (SMS), jeweils an das **durch** die Destinationsadresse (MSISDN) der betreffenden Kurzmeldung (SMS) bestimmte mobile Kommunikationsendgerät (5) unter Verwendung der gespeicherten Aufenthaltsinformationen.
